# EUROPEAN PATENT APPLICATION

(11) **EP 2 829 971 A1**
(43) Date of publication of application: **28.01.2015**
(21) Application number: 13778020.1
(22) Date of filing: 20.04.2013
(51) Int. Cl.: G06F 9/445, G06F 3/048

(54) **METHOD FOR STARTING APPLICATION PROGRAM AND TERMINAL DEVICE HAVING TOUCH DISPLAY SCREEN**

(30) Priority: 20.04.2012 CN 201210118898
(71) Applicant: Huawei Device Co., Ltd., Shenzhen, Guangdong 518129 (CN)
(72) Inventor: GAO, Wenmei, Shenzhen Guangdong 518129 (CN); WANG, Lei, Shenzhen Guangdong 518129 (CN); FAN, Shunan, Shenzhen Guangdong 518129 (CN); LV, Xiaoqiang, Shenzhen Guangdong 518129 (CN); WANG, Yahui, Shenzhen Guangdong 518129 (CN)
(74) Representative: Lord, Michael
(86) International application number: PCT/CN2013/074477
(87) International publication number: WO 2013/155988

(57) **Abstract**

The present invention relates to the field of communications technologies and provides a method for starting an application program and a terminal device having a touchscreen, so as to start at least one application program during unlocking. The method includes: displaying, in a first sensing area, an application program to be displayed; and in a case that the first trigger signal is detected in the first sensing area and a second trigger signal is detected in a second sensing area, unlocking the touchscreen and starting an application program triggered by the first trigger signal. The embodiments of the present invention are applicable to a scenario where a terminal device is used.

## Description

This application claims priority to Chinese Patent Application No. 201210118898.3, filed with the Chinese Patent Office on April 20, 2012, and entitled "METHOD FOR STARTING APPLICATION PROGRAM AND TERMINAL DEVICE HAVING TOUCHSCREEN", which is hereby incorporated by reference in its entirety.

### TECHNICAL FIELD

The present invention relates to the field of communications technologies, and in particular, to a method for starting an application program and a terminal device with a touchscreen.

### BACKGROUND

At present, a terminal device (such as a mobile phone or a tablet computer) generally has a lock screen function. If a user needs to run an application program on a terminal device in a lock screen state, the user must unlock the terminal device, search for the desired application program, and then after finding the desired application program, run the application program.

It can be seen that when a user is using a terminal device, the whole operation process of starting a desired application program is complex, and the user cannot directly run the desired application program. Such a terminal device brings inconvenience to the user and affects user experience.

### SUMMARY

Embodiments of the present invention provide a method for starting an application program and a terminal device having a touchscreen, so as to start at least one application program during unlocking.

To achieve the foregoing objective, the embodiments of the present invention adopt the following technical solutions:
A method for starting an application program is provided, which is applied to a terminal device, where the terminal device has a touchscreen, and the touchscreen includes a first sensing area and a second sensing area, where the first sensing area is configured to receive a first trigger signal, and the first trigger signal is used for triggering at least one application program displayed in the first sensing area; and the second sensing area is configured to receive a second trigger signal, and the second trigger signal is used for unlocking the touchscreen; the method including:
   displaying, in the first sensing area, an application program or application programs to be displayed; and
   in a case that the first trigger signal is detected in the first sensing area and the second trigger signal is detected in the second sensing area, unlocking the touchscreen and starting an application program triggered by the first trigger signal.

Correspondingly, a terminal device having a touchscreen is provided, where the touchscreen includes:
a first sensing area, configured to: when the terminal device is in a lock screen state, display an icon of an application program or application programs to be displayed; and receive a first trigger signal, where the first trigger signal is used for triggering at least one application program displayed in the first sensing area; and
a second sensing area, configured to receive a second trigger signal, where the second trigger signal is used for unlocking the touchscreen; and

The terminal device further includes:
a processor, configured to: in a case that the first sensing area receives the first trigger signal and the second sensing area receives the second trigger signal, unlock the touchscreen and start the application program triggered by the first trigger signal.

The embodiments of the present invention provide a method for starting an application program and a terminal device having a touchscreen, where in a case that the first trigger signal is detected in the first sensing area and the second trigger signal is detected in the second sensing area, the touchscreen is unlocked and the application program triggered by the first trigger signal is started. In the embodiments of the present invention, not only one but also a plurality of application programs can be started when the touchscreen is unlocked.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 shows a method for starting an application program according to an embodiment of the present invention;
FIG. 2 shows another method for starting an application program according to an embodiment of the present invention;
FIG. 3 is a schematic diagram of adopting a pattern unlocking manner to implement a method for operating an application program on a mobile phone;
FIG. 4 is a schematic diagram of adopting a gesture unlocking manner to implement a method for operating an application program on a mobile phone;
FIG. 5 is a schematic diagram of adopting a pattern unlocking manner to implement a method for operating an application program on a tablet computer;
FIG. 6 is a schematic diagram of adopting a gesture unlocking manner to implement a method for operating an application program on a tablet computer;
FIG. 7 shows still another method for starting an application program according to an embodiment of the present invention;
FIG. 8 is a schematic diagram of adopting a pattern unlocking manner to implement still another method for operating an application program on a mobile phone;
FIG. 9 is a schematic diagram of adopting a gesture unlocking manner to implement yet another method for operating an application program on a mobile phone;
FIG. 10 is a schematic diagram of adopting a pattern unlocking manner to implement still another method for operating an application program on a tablet computer;
FIG. 11 is a schematic diagram of adopting a gesture unlocking manner to implement yet another method for operating an application program on a tablet computer;
FIG. 12 shows yet another method for starting an application program according to an embodiment of the present invention;
FIG. 13 is a schematic diagram of adopting a pattern unlocking manner to implement yet another method for operating an application program on a mobile phone;
FIG. 14 is a schematic diagram of adopting a pattern unlocking manner to implement yet another method for operating an application program on a tablet computer;
FIG. 15 is a schematic diagram of adopting a gesture unlocking manner to implement yet another method for operating an application program on a mobile phone;
FIG. 16 is a schematic diagram of adopting a gesture unlocking manner to implement yet another method for operating an application program on a tablet computer; and
FIG. 17 shows a terminal device having a touchscreen according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

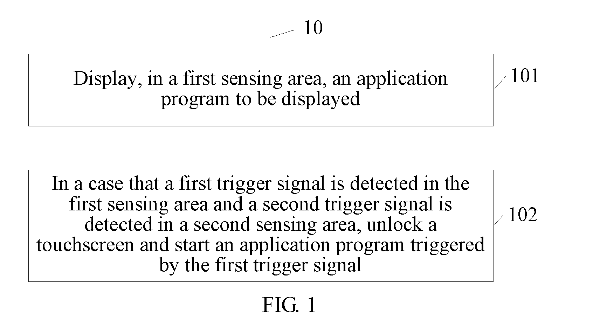

As shown in FIG. 1, an embodiment of the present invention provides a method 10 for starting an application program, which is applied to a terminal device. In all embodiments of the present invention, the terminal device includes a mobile terminal device and a fixed terminal device, such as a mobile phone, a display, and an all-in-one computer.

The terminal device has a touchscreen. The method 10 is executed by the terminal device. The touchscreen includes a first sensing area and a second sensing area. The first sensing area is configured to receive a first trigger signal, where the first trigger signal is used for triggering at least one application program displayed in the first sensing area; and the second sensing area is configured to receive a second trigger signal, where the second trigger signal is used for unlocking the touchscreen. The method includes:
101: Display, in the first sensing area, the application program or the application programs to be displayed.

In a process of implementing step 101, optionally, the at least one application program is displayed in the first sensing area according to a descending order of use frequency; or optionally, the at least one application program is displayed in the first sensing area according to an alphabetic order of names.

102: In a case that the first trigger signal is detected in the first sensing area and the second trigger signal is detected in the second sensing area, unlock the touchscreen and start the application program triggered by the first trigger signal.

In a process of implementing step 102, the second trigger signal may be a pattern trigger signal or a gesture trigger signal. In addition, in the embodiment of the present invention, step 102 is specifically, in a case that the first trigger signal is detected in the first sensing area and the second trigger signal is detected in the second sensing area within a predetermined period of time after the detection of the first trigger signal, unlocking the touchscreen and starting the application program triggered by the first trigger signal.

The embodiment of the present invention provides a method for starting an application program, where an application program or application programs to be displayed are displayed in the first sensing area, and in a case that the first trigger signal is detected in the first sensing area and the second trigger signal is detected in the second sensing area, the touchscreen is unlocked and the application program triggered by the first trigger signal is started. In this way, at least one application program is started. In the embodiment of the present invention, not only one but also a plurality of application programs can be started when the touchscreen is unlocked.

### Embodiment 2

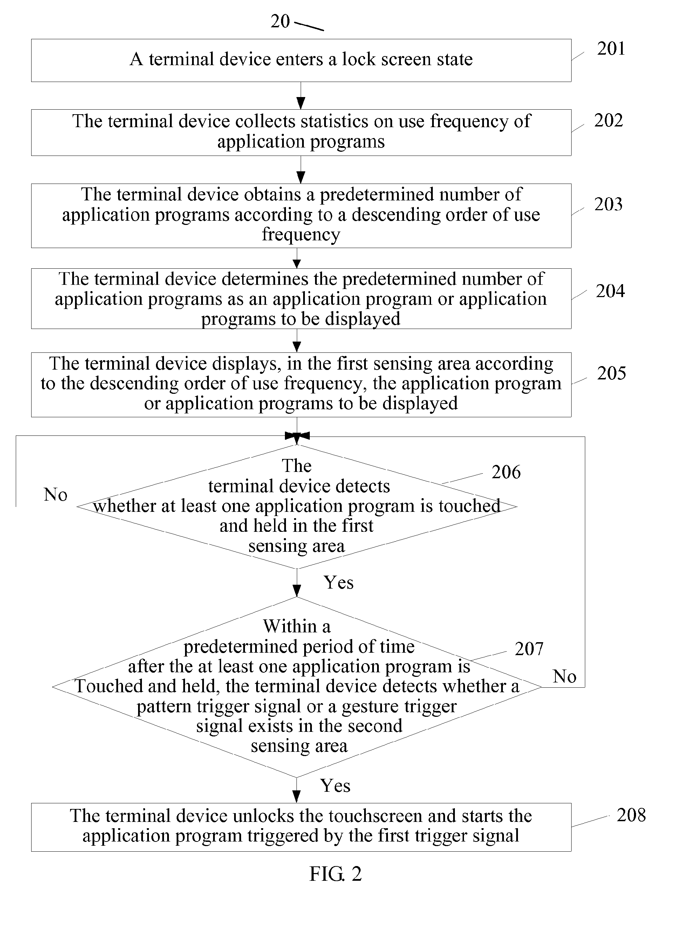

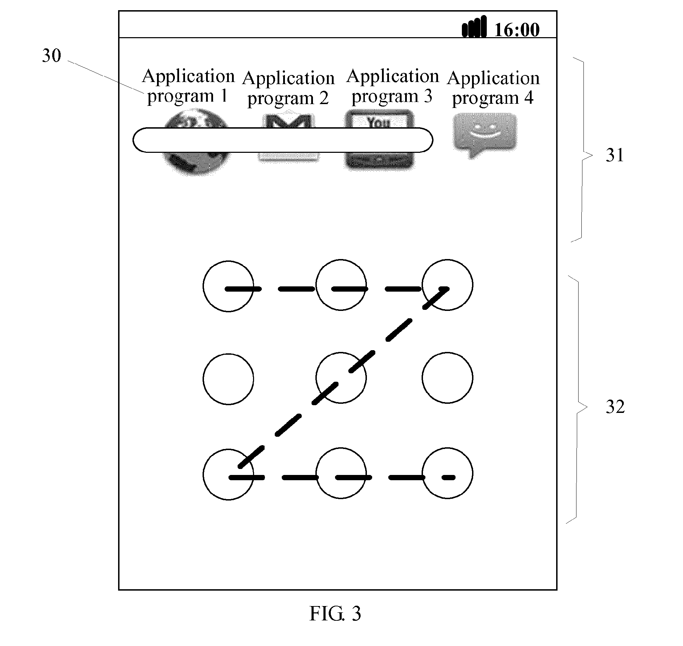

As shown in FIG. 2, the present invention provides another method 20 for starting an application program, which is applied to a terminal device. The terminal device may specifically be a mobile phone or a tablet computer. As shown in FIG. 3 to FIG. 6, the terminal device has a touchscreen 30, and the touchscreen 30 includes a first sensing area 31 and a second sensing area 32. The first sensing area 31 is configured to receive a first trigger signal, where the first trigger signal is used for triggering at least one application program displayed in the first sensing area; and the second sensing area 32 is configured to receive a second trigger signal, where the second trigger signal is used for unlocking the touchscreen.

The starting method 20 specifically includes the following steps 201 to 208:
201: The terminal device enters a lock screen state.
202: The terminal device collects statistics on use frequency of application programs.

Here, steps 201 and 202 may be performed in either order.

203: The terminal device obtains a predetermined number of application programs according to a descending order of use frequency. During specific implementation of step 203, the predetermined number is flexibly set according to an actual application, which is not limited in the present invention.

204: The terminal device determines the predetermined number of application programs as an application program or application programs to be displayed.

Through the foregoing steps 202 to 204, the terminal device can obtain the application program or the application programs to be displayed. In all embodiments of the present invention, an application program or application programs predetermined by a user may also be determined as the application program or the application programs to be displayed. According to needs, different policies may be adopted to obtain the application program or the application programs to be displayed.

205: The terminal device displays, in the first sensing area according to the descending order of use frequency, the application program or the application programs to be displayed. In this way, application programs frequently used by the user are displayed, which brings convenience to the user during use.

206: The terminal device detects whether at least one application program is touched and held (that is, whether the first trigger signal is detected) in the first sensing area, and if a detection result is yes, that is, if the terminal device detects that at least one application program is touched and held in the first sensing area, executes the following step 207; or if a detection result is no, that is, if the terminal device does not detect that an application program is touched and held in the first sensing area, repeatedly executes step 206.

207: Within a predetermined period of time after the at least one application program is touched and held, the terminal device detects whether a pattern trigger signal or a gesture trigger signal exists in the second sensing area, and if a detection result is yes, that is, if the terminal device detects a pattern trigger signal or a gesture trigger signal in the second sensing area, executes the following step 208; or if a detection result is no, that is, if the terminal device does not detect a pattern trigger signal or a gesture trigger signal in the second sensing area, returns to step 206.

It should be noted that in a process of executing step 207, the predetermined period of time after the at least one application program is touched and held is a predetermined period of time after the first trigger signal is detected, the predetermined period of time may be flexibly set according to an actual application or an empirical value, and in all embodiments of the present invention, length of the predetermined period of time is not limited.

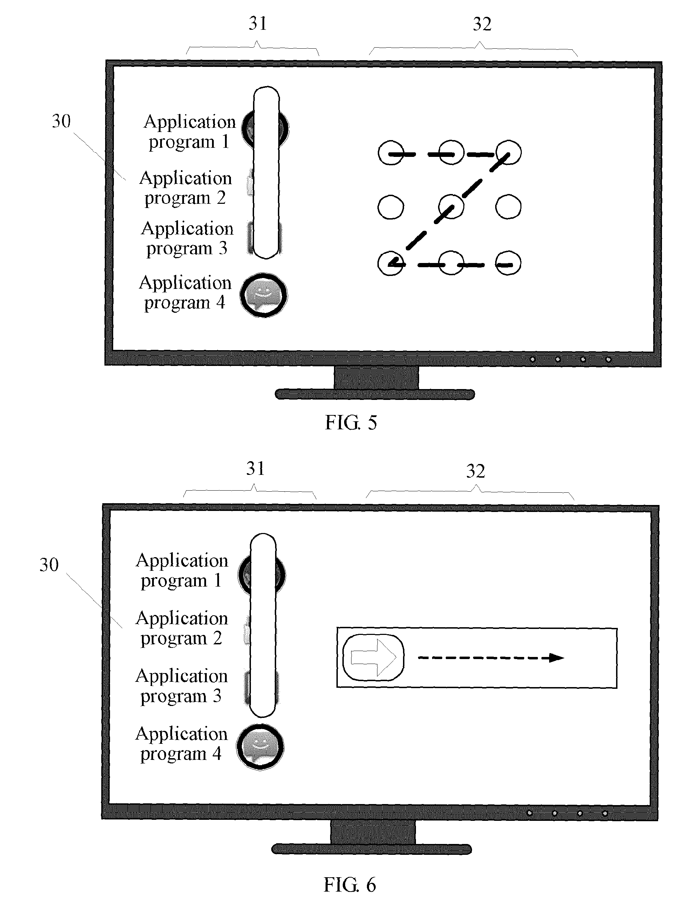

In a case that the second trigger signal is a pattern trigger signal, it is practicable that as shown in FIG. 3 and FIG. 5, application programs displayed in the first sensing area include: an application program 1, an application program 2, an application program 3, and an application program 4. If the user needs to start the application program 1, the application program 2, and the application program 3 during unlocking, the user may transversely touch icons corresponding to the application program 1, the application program 2, and the application program 3 in the first sensing area with a finger of the left hand, and draws an unlock pattern in the second sensing area with a finger of the right hand. It is implementable that during this process, the corresponding action with a finger of the right hand may be performed at the same time as the left-hand action, or may also be performed within a predetermined period of time after the left-hand action is performed.

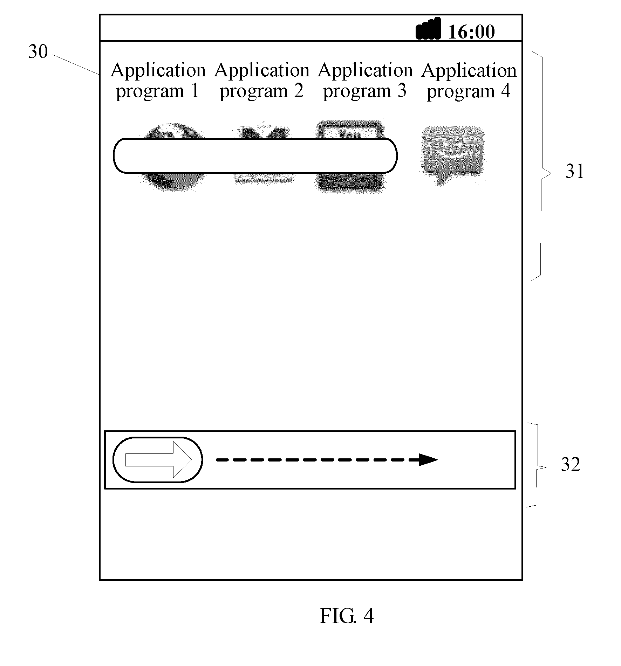

In a case that the second trigger signal is a gesture trigger signal, it is practicable that as shown in FIG. 4 and FIG. 6, application programs displayed in the first sensing area include: an application program 1, an application program 2, an application program 3, and an application program 4. If the user needs to start the application program 1, the application program 2, and the application program 3 during unlocking, the user may transversely touch icons corresponding to the application program 1, the application program 2, and the application program 3 in the first sensing area with a finger of the left hand and makes an unlock gesture, with a finger of the right hand, corresponding to the gesture trigger signal in the second sensing area.

Certainly, in a process of executing step 206, the at least one application program may be touched and held by using other operation methods, for example, using three fingers to separately touch the icons corresponding to an application program 1, an application program 2 and an application program 3 respectively, which is not limited the present invention.

It should be noted that the unlock gesture in the embodiment of the present invention includes drag, tap, touch and hold, or other gestures, and the unlock gestures adopted in FIG. 4 and FIG. 6 are dragging a scroll bar in a direction indicated by an arrow.

208: The terminal device unlocks the touchscreen and starts the application program triggered by the first trigger signal.

The embodiment of the present invention provides a method for starting an application program, where in a case that an icon of at least one application program is touched and held in the first sensing area and the second trigger signal is detected in the second sensing area, the touchscreen is unlocked and the application program that is touched and held is started. In a case that the second trigger signal is a pattern trigger signal, not only at least one application program can be started when the touchscreen is unlocked, but also security of the mobile phone is improved; in a case that the second trigger signal is a gesture trigger signal, at least one application program can be started when the touchscreen is unlocked.

### Embodiment 3

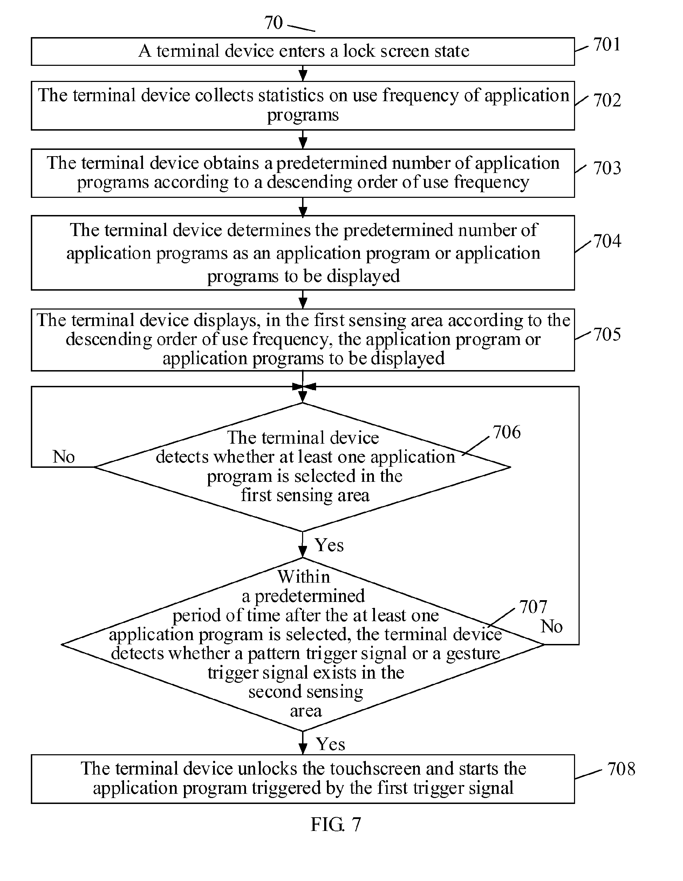

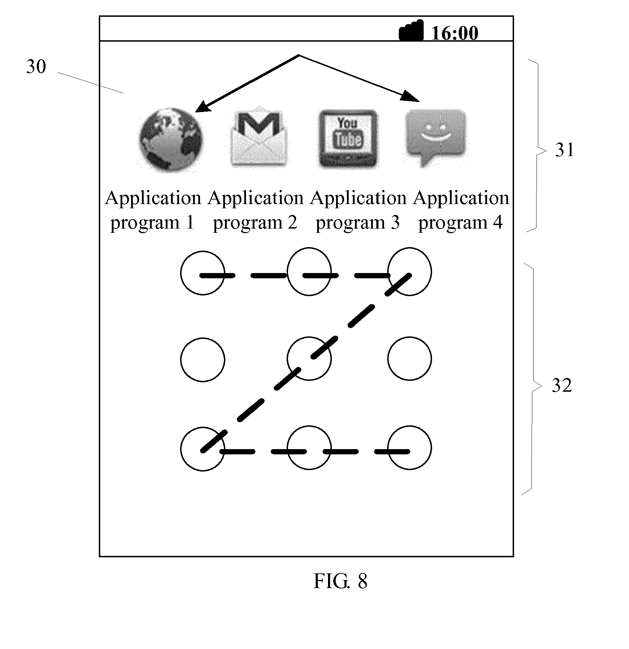

As shown in FIG. 7, the present invention provides another method 70 for starting an application program, which is applied to a terminal device. The terminal device may specifically be a mobile phone or a tablet computer. As shown in FIG. 8 to FIG. 11, the terminal device has a touchscreen 30, and the touchscreen 30 includes a first sensing area 31 and a second sensing area 32. The first sensing area 31 is configured to receive a first trigger signal, where the first trigger signal is used for triggering at least one application program displayed in the first sensing area; and the second sensing area 32 is configured to receive a second trigger signal, where the second trigger signal is used for unlocking the touchscreen.

The starting method 70 specifically includes the following steps 701 to 708:
701: The terminal device enters a lock screen state.
702: The terminal device collects statistics on use frequency of application programs.

Here, steps 701 and 702 may be performed in either order.

703: The terminal device obtains a predetermined number of application programs according to a descending order of use frequency.

704: The terminal device determines the predetermined number of application programs as an application program or application programs to be displayed.

705: The terminal device displays, in the first sensing area according to the descending order of use frequency, the application program or application programs to be displayed.

706: The terminal device detects whether at least one application program is selected (that is, whether the first trigger signal is detected) in the first sensing area, and if a detection result is yes, that is, if the terminal device detects that at least one application program is selected in the first sensing area, executes the following step 707; or if a detection result is no, that is, if the terminal device does not detect that an application program is selected in the first sensing area, repeatedly executes step 706.

In a specific implementation process of step 706, the terminal device detects whether the first trigger signal exists in the first sensing area, and if the first trigger signal exists in the first sensing area, the terminal device records that an application program corresponding to the first trigger signal is in a selected state. In the embodiment of the present invention, the selected state may be set in different manners, for example, setting an icon of the application program to gray or to be in a flashing state.

707: Within a predetermined period of time after the at least one application program is selected, the terminal device detects whether a pattern trigger signal or a gesture trigger signal exists in the second sensing area, and if a detection result is yes, that is, if the terminal device detects a pattern trigger signal or a gesture trigger signal in the second sensing area, executes the following step 708; or if a detection result is no, that is, if the terminal device does not detect a pattern trigger signal or a gesture trigger signal in the second sensing area, returns to step 706.

It should be noted that in a process of executing step 707, the predetermined period of time after the at least one application program is touched and held or selected is a predetermined period of time after the first trigger signal is detected, the predetermined period of time may be flexibly set according to an actual application or an empirical value, and in all embodiments of the present invention, length of the predetermined period of time is not limited.

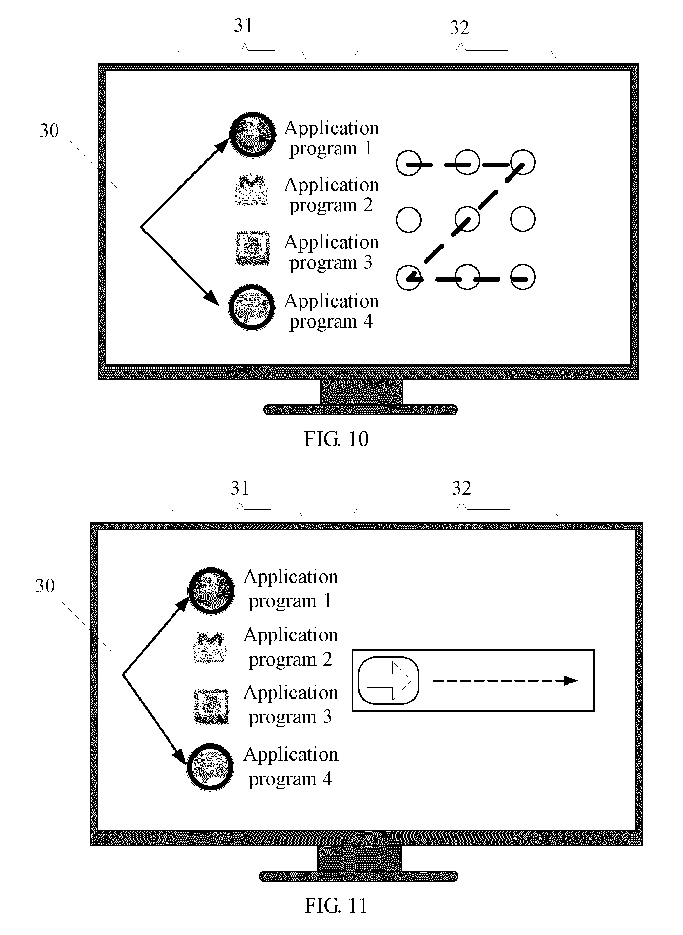

In a case that a trigger signal used for unlocking the touchscreen is a pattern trigger signal, it is practicable that as shown in FIG. 8 and FIG. 10, a user taps an icon of at least one application program, so that at least one application program is selected. In the embodiment of the present invention, a selected state of the selected application program may be gray, or the icon may be in a flashing state. In FIG. 8 and FIG. 10, the user selects an application program 1 and an application program 4. Within the predetermined period of time after the at least one application program is selected, the user draws an unlock pattern, thereby unlocking the touchscreen and starting the at least one application program.

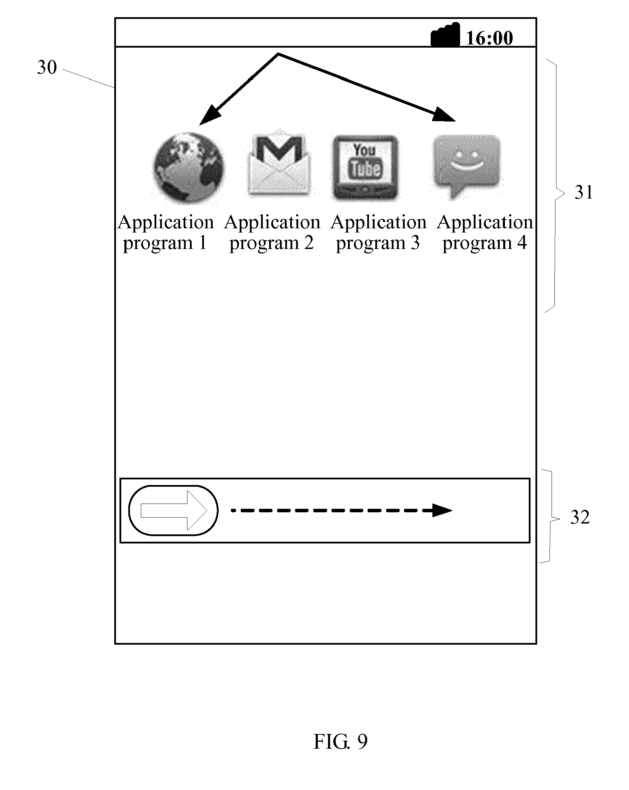

In a case that the second trigger signal is a gesture trigger signal, as shown in FIG. 9 and FIG. 11, a user selects an application program 1 and an application program 4, so that at least one application program is selected. Within the predetermined period of time after the at least one application program is selected, the user makes an unlock gesture corresponding to the gesture trigger signal.

It should be noted that the unlock gesture in the embodiment of the present invention includes drag, tap, touch and hold, or other gestures, and the unlock gestures adopted in FIG. 10 and FIG. 11 are dragging a scroll bar in a direction indicated by an arrow.

708: The terminal device unlocks the touchscreen and starts the application program triggered by the first trigger signal.

The embodiment of the present invention provides a method for starting an application program, where in a case that it is detected that an icon of at least one application program is selected in the first sensing area and the second trigger signal is detected in the second sensing area, the touchscreen is unlocked and the selected application program is started. In a case that the second trigger signal is a pattern trigger signal, not only at least one application program can be started when the touchscreen is unlocked, but also security of the mobile phone is improved; in a case that the second trigger signal is a gesture trigger signal, at least one application program can be started when the touchscreen is unlocked.

### Embodiment 4

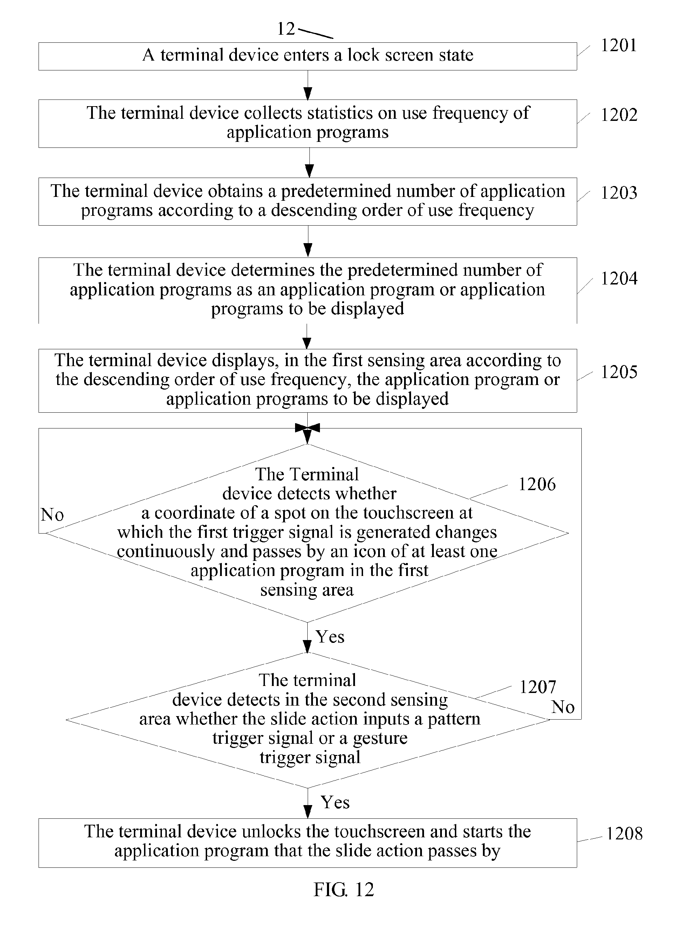

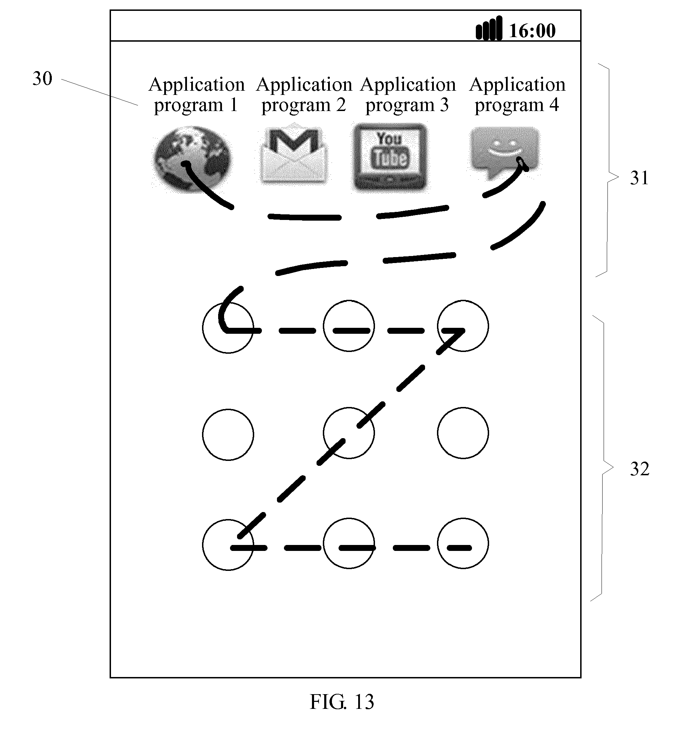

As shown in FIG. 12, the present invention provides another method 12 for starting an application program, which is applied to a terminal device. The terminal device may specifically be a mobile phone or a tablet computer. As shown in FIG. 13 to FIG. 16, the terminal device includes a touchscreen 30, and the touchscreen 30 includes a first sensing area 31 and a second sensing area 32. The first sensing area 31 is configured to receive a first trigger signal, where the first trigger signal is used for triggering at least one application program displayed in the first sensing area; and the second sensing area 32 is configured to receive a second trigger signal, where the second trigger signal is used for unlocking the touchscreen.

The starting method 12 specifically includes the following steps 1201 to 1208:
1201: The terminal device enters a lock screen state.
1202: The terminal device collects statistics on use frequency of application programs. In the embodiment of the present invention, steps 1201 and 1202 may be performed in either order.
1203: The terminal device obtains a predetermined number of application programs according to a descending order of use frequency.
1204: The terminal device determines the predetermined number of application programs as an application program or application programs to be displayed.

Through the foregoing steps 1202 to 1204, the terminal device can obtain the application program or application programs to be displayed. In all embodiments of the present invention, an application program predetermined by a user may also be determined as the application program or application programs to be displayed. According to needs, different policies may be adopted to obtain the application program or application programs to be displayed.

1205: The terminal device displays, in the first sensing area according to the descending order of use frequency, the application program or application programs to be displayed.

1026: The terminal device detects whether a coordinate of a spot on the touchscreen at which the first trigger signal is generated changes continuously and passes by an icon of at least one application program in the first sensing area, and if a detection result is yes, determines that a slide action passes by the icon of the at least one application program and executes the following step 1207; or if a detection result is no, repeatedly executes step 1206.

1207: The terminal device detects in the second sensing area whether the slide action inputs a pattern trigger signal or a gesture trigger signal (that is, the second trigger signal), and if a detection result is yes, that is, if the terminal device detects in the second sensing area that the slide action inputs a pattern trigger signal, executes the following step 1208; or if a detection result is no, that is, if the terminal device does not detect in the second sensing area that the slide action inputs a pattern trigger signal, returns to step 1206.

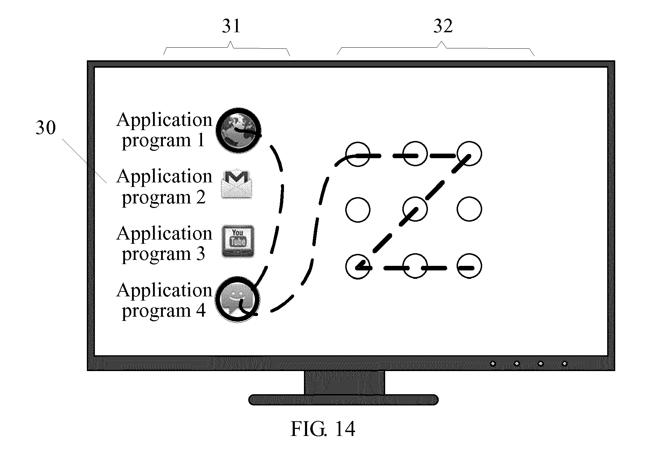

As shown in FIG. 13 and FIG. 14, it is practicable that the user may slide a finger in the first sensing area to pass by icons of an application program 1 and an application program 4, and continue to slide the finger to the second sensing area and draw an unlock pattern in the second sensing area.

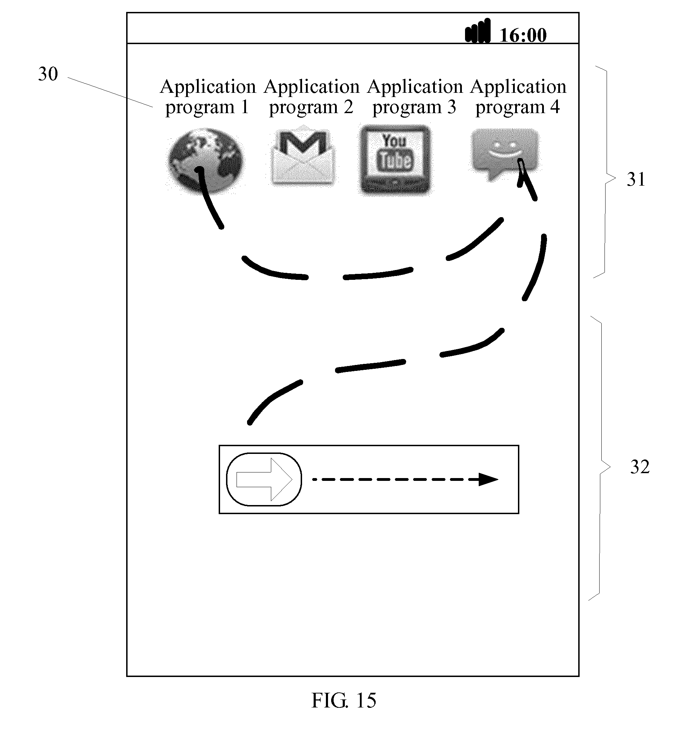

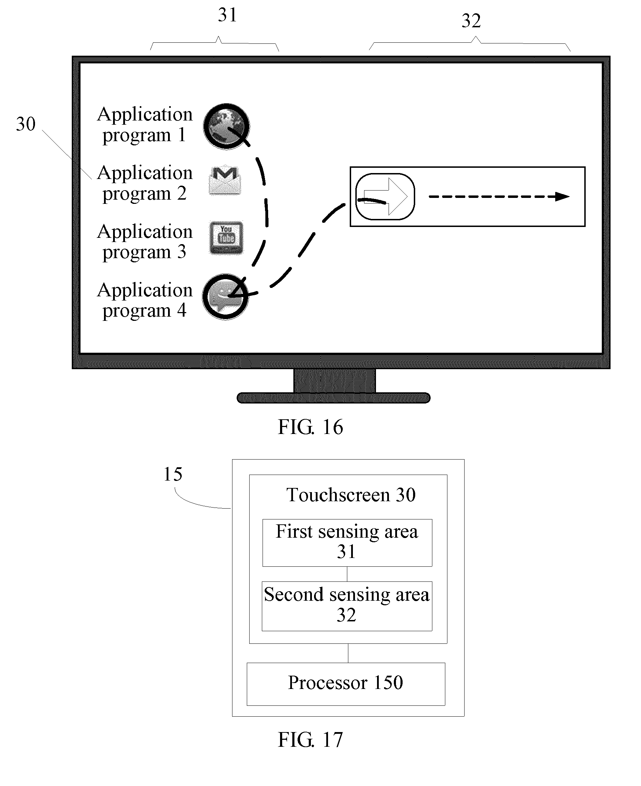

As shown in FIG. 15 and FIG. 16, it is practicable that the user may slide a finger in the first sensing area to pass by icons of an application program 1 and an application program 4, and continue to slide the finger to the second sensing area and drag a scroll bar to input the gesture trigger signal.

1208: The terminal device unlocks the touchscreen and starts the application program that the slide action passes by.

The embodiment of the present invention provides a method for starting an application program, where by detecting a coordinate of a spot on the touchscreen at which the first trigger signal is generated, it is determined that a slide action passes by an icon of the at least one application program; and in a case that it is detected in the second sensing area that the slide action inputs the second trigger signal, the touchscreen is unlocked and the application program that the slide action passes by is started. In a case that the trigger signal for unlocking the touchscreen is a pattern trigger signal, not only at least one application program can be started when the touchscreen is unlocked, but also security of the mobile phone is improved; in a case that the trigger signal for unlocking the touchscreen is a gesture trigger signal, at least one application program can be started when the touchscreen is unlocked.

It should be noted that for ease of description, the foregoing method embodiments are all described as a series of action combinations, but a person skilled in the art should know that the present invention is not limited to the described order of actions because some steps may be performed in other orders or simultaneously according to the present invention. Besides, a person skilled in the art should also know that the embodiments described in the specification are all exemplary embodiments, and the actions and modules involved are not necessarily required by the present invention.

### Embodiment 5

As shown in FIG. 17, an embodiment of the present invention provides a terminal device 15 having a touchscreen, where the touchscreen 30 includes:
a first sensing area 31, configured to: when the terminal device is in a lock screen state, display an icon of a predetermined application program; and receive a first trigger signal, where the first trigger signal is used for triggering at least one application program displayed in the first sensing area;
where, further, the first trigger signal is specifically a touch signal generated when an icon of at least one application program in the first sensing area is touched and held, or a touch signal generated when an icon of at least one application program in the first sensing area is selected; and
a second sensing area 32, configured to receive a second trigger signal, where the second trigger signal is used for unlocking the touchscreen, and optionally, the second trigger signal is a pattern trigger signal or a gesture trigger signal; and
the terminal device 15 further includes a processor 150, where
the processor 150 is configured to: in a case that the first sensing area receives the first trigger signal and the second sensing area receives the second trigger signal, unlock the touchscreen and start the application program triggered by the first trigger signal.

Further, the processor 150 is specifically configured to: in a case that the first sensing area receives the first trigger signal and the second sensing area receives the second trigger signal within a predetermined period of time after the first sensing area receives the first trigger signal, unlock the touchscreen and start the application program triggered by the first trigger signal.

Further, the processor 150 is specifically configured to:
detect a coordinate of a spot on the touchscreen at which the first trigger signal is generated, and if the coordinate changes continuously and passes by an icon of at least one application program in the first sensing area, determine that a slide action passes by the icon of the at least one application program; and
in a case that it is detected in the second sensing area that the slide action inputs the second trigger signal, unlock the touchscreen and start the application program that the slide action passes by.

In the embodiment of the present invention, the processor 150 is further configured to: when the terminal device is in the lock screen state, obtain, according to a predetermined policy, the application program or application programs to be displayed. Optionally, the processor 150 is specifically configured to collect statistics on use frequency of application programs, obtain a predetermined number of application programs according to a descending order of use frequency, and determine the predetermined number of application programs as the application program or application programs to be displayed; or determine an application program predetermined by a user as the application program or application programs to be displayed.

The embodiment of the present invention provides a terminal device having a touchscreen, where in a case that the first sensing area receives the first trigger signal and the second sensing area receives the second trigger signal, the processor unlocks the touchscreen and starts the application program triggered by the first trigger signal. In a case that the second trigger signal is a pattern trigger signal, not only at least one application program can be started when the touchscreen is unlocked, but also security of the mobile phone is improved; in a case that the second trigger signal is a gesture trigger signal, at least one application program can be started when the touchscreen is unlocked. Further, by detecting a coordinate of a spot on the touchscreen at which the first trigger signal is generated, the processor determines that a slide action passes by an icon of at least one application program; and in a case that it is detected in the second sensing area that the slide action inputs the second trigger signal, the processor unlocks the touchscreen and starts the application program that the slide action passes by. In this way, at least one application program is started when the touchscreen is unlocked.

In the foregoing embodiments, the description of each embodiment has its own focus. For the part that is not described in detail in a certain embodiment, reference may be made to related description in other embodiments. It may be clearly understood by a person skilled in the art that, for the purpose of convenient and brief description, for a detailed working process of the foregoing device and unit, reference may be made to a corresponding process in the foregoing method embodiments, and details are not described herein again.

It should be noted that in the present invention, the method for starting an application program is corresponding to the terminal device, and the steps of the method are executed by the functional units of the terminal device.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, an optical disc, or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for starting an application program, which is applied to a terminal device, wherein the terminal device has a touchscreen, and the touchscreen comprises a first sensing area and a second sensing area, wherein the first sensing area is configured to receive a first trigger signal, and the first trigger signal is used for triggering at least one application program displayed in the first sensing area; and the second sensing area is configured to receive a second trigger signal, and the second trigger signal is used for unlocking the touchscreen; the method comprising:
displaying, in the first sensing area, an application program or application programs to be displayed; and
in a case that the first trigger signal is detected in the first sensing area and the second trigger signal is detected in the second sensing area, unlocking the touchscreen and starting an application program triggered by the first trigger signal.

2. The method according to claim 1, wherein the second trigger signal is a pattern trigger signal or a gesture trigger signal.

3. The method according to claim 1, wherein in a case that the first trigger signal is detected in the first sensing area and the second trigger signal is detected in the second sensing area, the unlocking the touchscreen and starting the application program triggered by the first trigger signal is specifically:
in a case that the first trigger signal is detected in the first sensing area and the second trigger signal is detected in the second sensing area within a predetermined period of time after the first trigger signal is detected, unlocking the touchscreen and starting the application program triggered by the first trigger signal.

4. The method according to any one of claims 1 to 3, wherein that the first trigger signal is detected in the first sensing area specifically comprises that:
it is detected that an icon of at least one application program is touched and held in the first sensing area; or it is detected that an icon of at least one application program is selected in the first sensing area.

5. The method according to claim 1 or 2, wherein in a case that the first trigger signal is detected in the first sensing area and the second trigger signal is detected in the second sensing area, the unlocking the touchscreen and starting the application program triggered by the first trigger signal is specifically:
detecting a coordinate of a spot on the touchscreen at which the first trigger signal is generated, and if the coordinate changes continuously and passes by an icon of at least one application program in the first sensing area, determining that a slide action passes by the icon of the at least one application program; and
in a case that it is detected in the second sensing area that the slide action inputs the second trigger signal, unlocking the touchscreen and starting the application program that the slide action passes by.

6. The method according to claim 1, wherein before the displaying, in the first sensing area, an application program or application programs to be displayed, the method further comprises:
when the terminal device is in a lock screen state, obtaining, according to a predetermined policy, the application program or application programs to be displayed.

7. The method according to claim 6, wherein
the obtaining, according to a predetermined policy, the application program or application programs to be displayed is specifically:
collecting statistics on use frequency of application programs, obtaining a predetermined number of application programs according to a descending order of use frequency, and determining the predetermined number of application programs as the application program or application programs to be displayed; or
determining an application program predetermined by a user as the application program to be displayed.

8. The method according to any one of claims 1 to 3, wherein the displaying, in the first sensing area, an application program or application programs to be displayed is specifically:
displaying the at least one application program in the first sensing area according to a descending order of use frequency; or
displaying the at least one application program in the first sensing area according to an alphabetic order of names.

9. A terminal device having a touchscreen, wherein the touchscreen comprises:
a first sensing area, configured to: when the terminal device is in a lock screen state, display an icon of an application program or application programs to be displayed; and receive a first trigger signal, wherein the first trigger signal is used for triggering at least one application program displayed in the first sensing area; and
a second sensing area, configured to receive a second trigger signal, wherein the second trigger signal is used for unlocking the touchscreen;
wherein, the terminal device further comprises:
a processor, configured to: in a case that the first sensing area receives the first trigger signal and the second sensing area receives the second trigger signal, unlock the touchscreen and start an application program triggered by the first trigger signal.

10. The terminal device according to claim 9, wherein the second trigger signal is a pattern trigger signal or a gesture trigger signal.

11. The terminal device according to claim 9, wherein the processor is specifically configured to: in a case that the first sensing area receives the first trigger signal and the second sensing area receives the second trigger signal within a predetermined period of time after the first sensing area receives the first trigger signal, unlock the touchscreen and start the application program triggered by the first trigger signal.

12. The terminal device according to any one of claims 9 to 11, wherein the first trigger signal is specifically:
a touch signal generated when an icon of at least one application program in the first sensing area is touched and held, or a touch signal generated when an icon of at least one application program in the first sensing area is selected.

13. The terminal device according to claim 9 or 10, wherein the processor is specifically configured to:
detect a coordinate of a spot on the touchscreen at which the first trigger signal is generated, and if the coordinate changes continuously and passes by an icon of at least one application program in the first sensing area, determine that a slide action passes by the icon of the at least one application program; and
in a case that it is detected in the second sensing area that the slide action inputs the second trigger signal, unlock the touchscreen and start the application program that the slide action passes by.

14. The terminal device according to claim 9, wherein the processor is further configured to:
when the terminal device is in the lock screen state, obtain, according to a predetermined policy, the application program or application programs to be displayed.
